# EUROPEAN PATENT SPECIFICATION

(11) **EP 0 670 353 B1**
(45) Date of publication and mention of the grant of the patent: **04.08.1999**
(21) Application number: 95102554.3
(22) Date of filing: 23.02.1995
(51) Int. Cl.: C08L 27/16, C09D 127/16, C08F 114/22

(54) **Poly(vinylidene fluoride) blends and their use for formulating high gloss paints**
Polyvinylidenfluoride Mischungen und ihre Anwendung zur Formulierung hochglänzender Anstriche
Mélanges de poly(vinylidène fluorides) et leur application pour formuler des peintures à haute brillance

(30) Priority: 04.03.1994 IT MI940402
(43) Date of publication of application: 06.09.1995
(73) Proprietor: AUSIMONT S.p.A., I-20121 Milano (IT)
(72) Inventor: Lin, Shiow-Ching, Randolph, NJ 07869 (US); Burks, Steven John, Long Valley, NJ (US); Kent, Bradley Lane, Bedminster, NJ 07921 (US); Kamsler, Craig, North Brunswick, NJ 08902 (US)
(74) Representative: Sama, Daniele, Dr.

(56) References cited:
- EP-A- 0 526 216
- US-A- 3 780 007
- US-A- 3 929 934
- US-A- 4 302 556
- US-A- 4 400 487

## Description

The present invention relates to poly(vinylidene fluoride) blends and to their use for formulating high gloss paints.

It is known the use of poly(vinylidene fluoride) (PVDF) as a resin for the formulation of protective paints to be applied on metal surfaces exposed to weathering and/or to corrosive substances. After the application, the coating is usually subjected to a process of baking at high temperature and subsequent quenching. The protective action exerted by PVDF is surely higher than that of other resins, such as siloxanes, acrylates, polyurethanes, polyesters, etc. However, with respect to the latter, the gloss of the protective layer is low.

Since the gloss depends essentially on the resin fluidity and on the re-crystallization rate of the same after the process of baking and quenching, it is known to improve the gloss using a reduced molecular weight PVDF, obtained by polymerizing vinylidene fluoride (VDF) in aqueous emulsion in the presence of a suitable chain transfer agent (see for example US patent 5,095,081). However, this method implies a remarkable worsening of the solvent resistance of the coating. Such resistance can be improved by increasing the PVDF crystallinity by means of annealing processes (for instance at 120°C for 16 hours), which, however, considerably lengthens the processing time, making the process unsuitable for an application on industrial scale. The crystallinity of the low molecular weight PVDF can be enhanced modifying the synthesis process, in particular by lowering the polymerization temperature. This results in long processing times and substantially increased costs. In any event, a high crystallinity degree, which gradually increases during storage, develops internal stresses because of shrinkage phenomena, and lowers the coating flexibility. It results therefore more easily subject to failure and cracking.

The Applicant has now surprisingly found that protective coatings based on PVDF having an improved gloss can be obtained, while retaining high solvent resistance and very good flexibility. Such a result is achieved by using PVDF blends having different characteristics, the former with reduced molecular weight, the latter with high molecular weight, as described hereinbelow.

Therefore, a first object of the present invention is a polymeric blend comprising: (a) from 5 to 95% by weight of a PVDF obtainable by emulsion polymerization and having a melt viscosity of from 6 to 15 kPoise ; (b) from 5 to 95% by weight of a PVDF obtainable by emulsion polymerization and having a melt viscosity from 30 to 50 kPoise, the melt viscosity being measured at 232°C and 100 sec⁻¹ shear rate.

Particularly preferred is a polymeric blend wherein the component (a) is present in an amount of from 40 to 90% by weight, and the component (b) in an amount of from 10 to 60% by weight.

For the purposes of the present invention, with poly(vinylidene fluoride) (PVDF) it is meant VDF homopolymers and VDF copolymers with 0.1-15% by mole of another fluoroolefin, such as vinyl fluoride, hexafluoropropene, trifluoroethylene, chlorotrifluoroethylene, and tetrafluoroethylene. Particularly preferred are VDF homopolymers.

A further object of the present invention is a paint comprising a PVDF blend as described above. The amount of PVDF blend typically present in the paint is from 10 to 90%, preferably from 30 to 80%, by weight of the total dry resin content. The paint generally contains also a second non-fluorinated resin, which serves as property modifier and should be thermodinamically campatible with PVDF. For example, the second resin can be selected from: polymethylmethacrylate, polyethylmethacrylate, polyvinylacetate, polymethylacrylate, polyethylacrylate, and copolymers thereof. The same resins containing functionalized comonomers for crosslinking reactions can also be used.

The resins are dispersed in an organic solvent, or a mixture of organic solvents. As solvents can be used "intermediate" solvents, namely solvents that do not dissolve or swell PVDF resin at room temperature, while solvating PVDF resin at elevated temperatures and, on cooling to ambient, retain PVDF resin in solution. As "intermediate" solvents can be employed: isophorone, Carbitol^{(R)} acetate, butyrolactone, etc. They can be used in admixture with a "latent" solvent, namely a solvent that does not dissolve or substantially swell PVDF resin at room temperature, while solvating PVDF resin at elevated temperatures, but, on cooling, PVDF resin separates from the solution. Suitable "latent" solvents are, for example: dimethyl phthalate, glycol ether acetates, etc.

The paint usually comprises other conventional additives, such as: surfactants, pigments, waxes, stabilizers, and flow modifiers.

The preparation of the polymeric blends of the present invention can be carried out according to various methods.

A first technique consists in thoroughly mixing the two kinds of PVDF in the form of powder. The PVDF in the form of powder is usually prepared, according to well known techniques, starting from the latex obtained by polymerizing VDF in aqueous emulsion, from which the polymer is separated by coagulation, filtered, washed and dried. For the use in the formulation of paints, the product is then carefully ground, for instance in a mill, to obtain particles having an average diameter lower then 20 µm

Alternatively, it is possible to carry out the co-coagulation of two different latexes, the former containing the reduced molecular weight PVDF, the latter the high molecular weight PVDF. The product, coagulated and processed as described above, contains therefore primary particles of different kind.

Another technique that is particularly advantageous for the preparation of the polymeric blends of the present invention consists in polymerizing VDF in aqueous emulsion in two different steps. In the first step, the polymerization is carried out without the presence of a chain transfer agent, in order to obtain a PVDF having high molecular weight; when the desired amount of monomer is consumed, fresh VDF is introduced along with a suitable chain transfer agent, in an amount such as to yield a PVDF having a low molecular weight as described above.

The polymerization of VDF in aqueous emulsion is well known in the art. It is carried out in the presence of a suitable initiator, at a temperature generally comprised between 20° and 160°C, preferably between 30° and 130°C, with a reaction pressure ranging from 30 to 100 bar, preferably from 40 to 90 bar.

As initiator, any compound capable of generating active radicals at the selected polymerization temperature can be employed. It can be selected for instance from: peroxide inorganic salts, such as sodium, potassium or ammonium peroxydisulphate; dialkylperoxides, such as ditertbutyl-peroxide (DTBP); dialkylperoxydicarbonates, such as diethyl- and diisopropyl-peroxydicarbonate (IPP), bis-(4-t-butyl-cyclohexyl)-peroxydicarbonate; t-alkylperoxybenzoates; t-alkylperoxypivalates, such as t-butyl and t-amyl-perpivalate; acetylcyclohexansulphonyl peroxide; dibenzoyl peroxide; dicumylperoxide.

The amount of employed initiator is not critical, and is generally comprised between 0.1 and 10 g/l_{H2O}, preferably from 0.5 to 5 g/l_{H2O}.

Usually, the reaction is carried out in the presence of a suitable surfactant (see for instance those described in US patents 4,360,652 and 4,025,709), in order to give a stable emulsion. They are in general fluorinated surfactants, selected from the products of general formula:

R_{f}-X⁻ M⁺

wherein R_{f} is a C₅-C₁₆ (per)fluoroalkyl chain or a (per)fluoropolyoxyalkylene chain, X⁻ is -COO⁻ or -SO₃⁻, M⁺ is selected from: H⁺, NH₄⁺, alkali metal ion. Commonly employed are: ammonium perfluoro-octanoate; (per)fluoropolyoxyalkylenes end-capped with one or more carboxylic groups; sulphonic acid salts having formula R_{f}-C₂H₄SO₃H, wherein R_{f} is a C₄-C₁₀ perfluoroalkyl (see US patent 4,025,709); etc.

As chain transfer agents, those known for PVDF can be employed, such as for example: ketones, esters, ethers or aliphatic alcohols having from 3 to 10 carbon atoms, such as acetone, ethylacetate, methyltertbutylether, diethylether, isopropyl alcohol, etc.; chloro(fluoro)carbons, optionally containing hydrogen, having from 1 to 6 carbon atoms, such as chloroform, trichlorofluoromethane; bis(alkyl)carbonates wherein the alkyl group has from 1 to 5 carbon atoms, such as bis(ethyl)carbonate, bis(isobutyl)carbonate, etc.

The chain transfer agent is fed into the reactor continuously, or in discrete amounts during the second polymerization step. It is also possible to add all the chain transfer agent at the beginning of the second step. The total amount of chain transfer agent to be added depends both on the efficiency of the transfer agent itself, and on the molecular weight that is to be obtained, which gives a value of melt viscosity within the range above. Generally, for the aim of the present invention, the total amount of chain transfer agent ranges from 0.05 to 5%, preferably from 0.1 and 2.5% by weight with respect to the total amount of monomer fed into the reactor.

Some working examples are reported in the following, whose aim is merely illustrative but not limitative of the scope of the invention itself.

For the formulation of the paints, the following base composition was employed (% by weight):
- Acryloid^{(R)} B44S (40% in toluene) 54.58
- isophorone 7.30
- dimethyl phthalate 4.45
- Cystat^{(R)} SN (surfactant) 0.09
- Shepherd Blue # 3 (pigment) 21.30
- Carbitol^{(R)} acetate 12.28

The various components were carefully mixed by double grinding in a sand mill. The paint was then prepared by dispersing 20 parts of PVDF (in the form of a finely ground powder) in a mixture containing 40 parts of the base composition and 21 parts of isophorone. The components were homogeneized for an hour in a shaker containing an equal weight of 3 mm glass beads.

### EXAMPLES 1-17

### Preparation of low molecular weight PVDF.

P-1. In a 7.5 liter stainless steel horizontal reactor, equipped with a paddle agitator, 4375 g of deionized water and 4 g of a hydrocarbon wax melting at 50°-60°C were charged. The reactor was sealed, deaerated with a nitrogen flow and evacuated. 1000 g of deionized and deaerated water, containing 2.99 g of ammonium perfluorooctanoate, were added. The reactor was then heated to 120°C and brought to a pressure of 4,48 MPa (650 psig) by means of gaseous VDF. 8.0 ml of methyltertbutyl-ether (MTBE) as chain transfer agent were then added. The reaction was initiated by introducing into the reactor 19.1 ml of di-tertbutyl-peroxide (DTBP). After an induction period of about 15 minutes, the reaction started, as indicated by a pressure decrease. The VDF was fed continuously, keeping the pressure at 4,48 MPa and the temperature at 120°C. After about 3 hours, the monomer feed was stopped (1898 g of VDF totally fed). To maximize the yield, the system was allowed to continue reacting until the reactor pressure was decreased to 1,03 MPa (150 psig). The reactor was then cooled, the unreacted VDF vented, and the latex drained from the reactor. The latex contained 25% by weight of solids. The polymer was coagulated by adding nitric acid, then washed to neutral pH with deionized water, and dried in a convection oven at 60°C. The product was characterized by means of melting point (measured by Differential Scanning Calorimetry - DSC) and of melt viscosity (at 232°C and shear rate v of 100 sec⁻¹, measured with a Kayeness Galaxy V^{(R)} capillary rheometer having a lenght/diameter ratio of 15/1). The obtained values are reported in Table 1.
P-2. In a 7.5 liter stainless steel horizontal reactor, equipped with a paddle agitator, 4175 g of deionized water and 4 g of a hydrocarbon wax melting at 50°-60°C were charged. The reactor was sealed, deaerated with a nitrogen flow and evacuated. 1000 g of deionized and deaerated water, containing 2.99 g of ammonium perfluorooctanoate, were added. The reactor was then heated to 125°C and brought to a pressure of 4,48 MPa (650 psig) by means of gaseous VDF. 10.5 ml of a 6.52% w/v solution of isopropyl alcohol (IPA) were then pumped into the reactor as chain transfer agent. The reaction was initiated by introducing into the reactor 5.1 ml of DTBP. After an induction period of about 20 minutes, the reaction started, as indicated by a pressure decrease. The VDF was fed continuously, keeping the pressure at 4,48 MPa (650 psig) and the temperature at 125°C. IPA and DTBP were fed during the reaction in discrete amounts such as to give a ratio between IPA solution and monomer consumed of 0.0342 ml/g, and a ratio between DTBP and monomer consumed of 0.0166 ml/g. IPA and DTBP were added until 50% of the total VDF was consumed. After about 5 hours, the monomer feed was stopped (2298 g of VDF totally fed). To maximize the yield, the system was allowed to continue reacting until the reactor pressure was decreased to 1,03 MPa (150 psig). The reactor was then cooled, the unreacted VDF vented, and the latex drained from the reactor. The latex contained 29.1% by weight of solids. The polymer, coagulated, washed and dried, was characterized as described above. The obtained values are reported in Table 1.
P-3. It was prepared with the same method of polymer P-2, except that: the addition of DTBP was continued until 51% of the total VDF was consumed, while the addition of the IPA solution was continued until 68% of the total VDF was consumed; the total amount of monomer consumed was 1652 g, with a total reaction time of 6 hours; the resulting latex contained 21.7% by weight of solids. The polymer, coagulated, washed and dried, was characterized as described above. The data are reported in Table 1.
P-4. In a 7.5 liter stainless steel horizontal reactor, equipped with a paddle agitator, 4375 g of deionized water and 4 g of a hydrocarbon wax melting at 50°-60°C were charged. The reactor was sealed, deaerated with a nitrogen flow and evacuated. 1000 g of deionized and deaerated water, containing 2.99 g of ammonium perfluorooctanoate, were added. The reactor was then heated to 125°C and brought to a pressure of 4,48 MPa (650 psig) by means of gaseous VDF. 8.6 ml of MTBE were then added as chain transfer agent. The reaction was initiated by introducing into the reactor 5.4 ml of DTBP. After an induction period of about 15 minutes, the reaction started, as indicated by a pressure decrease. The VDF was fed continuously, keeping the pressure at 4,48 MPa (650 psig) and the temperature at 125°C. DTBP was fed during the reaction in discrete amounts such as to give a ratio between DTBP and monomer consumed of 0.0166 ml/g. DTBP was added until 61% of the total VDF was consumed. After about 4.5 hours, the monomer feed was stopped (1876 g of VDF totally fed). To maximize the yield, the system was allowed to continue reacting until the reactor pressure was decreased to 1,03 MPa (150 psig). The so obtained latex contained 24.0% by weight of solids. The polymer, coagulated, washed and dried, was characterized as described above. The obtained values are reported in Table 1.

The polymers P-1, P-2, P-3, and P-4 having low molecular weight, prepared as described above, were co-dispersed in isophorone with Hylar^{(R)} 5000 (P-5), a commercial high molecular weight PVDF having a melt viscosity of 31.1 kPoise (at 232°C and ν = 100 sec⁻¹), to form blends B-1/B-12 in the relative amounts reported in Table 2. These blends were employed to prepare paints according to the method described hereinabove. Each paint was applied on a 0.6 mm thick aluminium panel, which was then baked in an oven at 540°F (282°C) to obtain 460°F (238°C) of peak metal temperature, and then quenched in a water bath at room temperature. The so obtained coating, having a thickness of about 20 µm, was characterized for gloss and methylethylketone (MEK) resistance. The gloss was measured by means of a specular glossmeter in accordance with ASTM Method D 523-85, with an angle of incidence of the light beam of 60°, and is expressed in % relative to the gloss of a polished black glass. The MEK resistance was measured according to ASTM Method D-4752-87 (rubs with a cloth soaked in MEK) and expressed as number of double rubs until the removal of the paint was obtained, with exposure of metal substrate. The data are reported in Table 2, along with the values, for comparison purposes, relating to paints prepared with the polymers P1-P5 alone (comparative Examples 4, 5, 9, 13, 17).

### EXAMPLES 18-20

The following PVDF blends B-13 / B-15 were directly prepared by means of the following two-stage polymerization process.

In a 7.5 liter stainless steel horizontal reactor, equipped with a paddle agitator, 4375 g of deionized water and 4 g of a hydrocarbon wax melting at 50°-60°C were charged. The reactor was sealed, deaerated with a nitrogen flow and evacuated. 1000 g of deionized and deaerated water, containing 2.99 g of ammonium perfluorooctanoate, were added. The reactor was then heated to 120°C and brought to a pressure of 4,48 MPa (650 psig) by means of gaseous VDF. The reaction was initiated by introducing into the reactor 19.1 ml of DTBP. After an induction period of about 15 minutes, the reaction started, as indicated by a pressure decrease. The VDF was fed continuously, keeping the pressure at 4,48 MPa (650 psig) and the temperature at 120°C. After consuming 25% (B-13, Ex.18), 50% (B-14, Ex.19), or 75% (B-15, Ex.20) by weight of the total VDF, MTBE was added as chain transfer agent, in the form of a 3% by weight solution in deionized water. The MTBE solution was fed in portions of 28 ml per 200 g of VDF consumed. The last portion of MTBE was added when the total VDF consumed was within 200 g of the final value of 1898 g.

From the latexes obtained in the three processes, the blends B-13, B-14, and B-15 were coagulated, which, after washing and drying, were characterized as reported in Table 1. The same blends, used to formulate paints as described hereinabove, gave the results reported in Table 2.

### EXAMPLES 21-24

A high molecular weight PVDF (P-6) was prepared according to the same process described for P-1, except that no chain transfer agent was added; a total amount of 2298 g of VDF was fed; the obtained latex had a content of 30.0% by weight of solids. From the latex, the polymer P-6 was separated, having the characteristics reported in Table 1.

The same latex was mixed with the latex obtained during the preparation of the polymer P-1, in such amounts to give the blends B-16/B-18 reported in Table 2. The percentages are referred to the polymer quantities before coagulation, washing and drying. Such blends were used to formulate paints according to the method described hereinabove. The results are reported in Table 2, along with the values obtained for the paint prepared starting from high molecular weight polymer P-6 alone (Ex. 24, comparative).

**TABLE 1**

| PRODUCT | MELTING POINT (°C) | MELT VISCOSITY (at 232°C, 100 sec⁻¹) (kPoise) |
|---|---|---|
| P-1 | 162.4 | 13.9 |
| P-2 | 163.2 | 14.2 |
| P-3 | 163.0 | 10.6 |
| P-4 | 162.4 | 6.6 |
| P-5 | 160.0 | 31.1 |
| B-13 | 161.3 | 20.7 |
| B-14 | 160.8 | 23.8 |
| B-15 | 162.1 | 32.2 |
| P-6 | 158.6 | 34.9 |

**TABLE 2**

| EX. | PRODUCT (weight ratio) | | 60° GLOSS (%) | MEK RESISTANCE (# double rubs) |
|---|---|---|---|---|
| | | P-1/P-5 | | |
| 1 | B-1 = | 75/25 | 42.8 | > 200 |
| 2 | B-2 = | 50/50 | 41.5 | > 200 |
| 3 | B-3 = | 20/80 | 37.8 | > 200 |
| 4* | P-1 = | 100/0 | 50.0 | 170 |
| 5* | P-5 = | 0/100 | 35.1 | > 200 |

| | | P-2/P-5 | | |
|---|---|---|---|---|
| 6 | B-4 = | 75/25 | 47 | > 200 |
| 7 | B-5 = | 50/50 | 43 | > 200 |
| 8 | B-6 = | 20/80 | 37 | > 200 |
| 9* | P-2 = | 100/0 | 51.5 | 34 |

| | | P-3/P-5 | | |
|---|---|---|---|---|
| 10 | B-7 = | 75/25 | 49.5 | > 200 |
| 11 | B-8 = | 50/50 | 46.5 | > 200 |
| 12 | B-9 = | 20/80 | 39 | > 200 |
| 13* | P-3 = | 100/0 | 53.5 | 137 |

| | | P-4/P-5 | | |
|---|---|---|---|---|
| 14 | B-10= | 75/25 | 53 | > 200 |
| 15 | B-11= | 50/50 | 47.7 | > 200 |
| 16 | B-12= | 20/80 | 40.5 | > 200 |
| 17* | P-4 = | 100/0 | 57.3 | 60 |
| 18 | B-13= | 75/25 | 47.8 | > 200 |
| 19 | B-14= | 50/50 | 43.3 | > 200 |
| 20 | B-15= | 25/75 | 38.3 | > 200 |

| | | P-1/P-6 | | |
|---|---|---|---|---|
| 21 | B-16= | 75/25 | 45 | > 200 |
| 22 | B-17= | 50/50 | 35.7 | > 200 |
| 23 | B-18= | 20/80 | 27.9 | > 200 |
| 24* | P-6 = | 0/100 | 21 | > 200 |

| | | | | |
|---|---|---|---|---|
| * comparative examples | | | | |

## Claims

1. A polymeric blend comprising: (a) from 5 to 95% by weight of a poly(vinylidene fluoride) (PVDF) obtainable by emulsion polymerization and having a melt viscosity of from 6 to 15 kPoise; (b) from 5 to 95% by weight of a PVDF obtainable by emulsion polymerization and having a melt viscosity from 30 to 50 kPoise; the melt viscosity being measured at 232°C and 100 sec⁻¹ shear rate.

2. The polymeric blend of claim 1 wherein the component (a) is present in an amount of from 40 to 90% by weight, and the component (b) in an amount of from 10 to 60% by weight.

3. A process for preparing the polymeric blend of claims from 1 to 2, which comprises thoroughly mixing the two components in the form of powder.

4. A process for preparing the polymeric blend of claims from 1 to 2, which comprises co-coagulating an aqueous latex containing component (a) with an aqueous latex containing component (b).

5. A process for preparing the polymeric blend of claims from 1 to 2, which comprises polymerizing VDF in aqueous emulsion in two steps, in the first step operating without chain transfer agent to obtain a PVDF having high melt viscosity according to the definition of component (b), in the second step operating in the presence of a chain transfer agent, in an amount such as to yield a PVDF having a low melt viscosity according to the definition of component (a).

6. A paint comprising the polymeric blend of claims from 1 to 2, in an amount of from 10 to 90% by weight of the dry resin content.

7. The paint of claim 6, which comprises a second non-fluorinated resin.

8. The paint of claim 7, wherein the second resin is selected from: polymethylmethacrylate, polyethylmethacrylate, polyvinylacetate, polymethylacrylate and polyethylacrylate, and copolymers thereof.

9. The paint of anyone of claims from 6 to 8, which further comprises conventional additives selected from: surfactants, pigments, waxes, stabilizers, flow modifiers.

## Patentansprüche

1. Polymerlegierung enthaltend (a) Polyvinylidenfluorid, das durch Emulsionspolymerisation erhältlich ist und eine Schmelzviskosität von 6-15 kPoise hat, in einer Menge von 5-95 Gew.-% und (b) Polyvinylidenfluorid, das durch Emulsionspolymerisation erhältlich ist und eine Schmelzviskosität von 30-50 kPoise hat, in einer Menge von 5-95 Gew.-%, wobei die Schmelzviskosität bei 232°C und einer Schergeschwindigkeit von 100 sec⁻¹ gemessen wird.

2. Polymerlegierung nach Anspruch 1, dadurch gekennzeichnet, daß darin die Komponente (a) in einer Menge von 40-90 Gew.-% und die Komponente (b) in einer Menge von 10-60 Gew.-% enthalten ist.

3. Verfahren zur Herstellung der Polymerlegierung nach Anspruch 1 oder 2, dadurch gekennzeichnet, daß die beiden Komponenten in Pulverform gründlich durchmischt werden.

4. Verfahren zur Herstellung der Polymerlegierung nach Anspruch 1 oder 2, dadurch gekennzeichnet, daß eine wäßrige Emulsion der Komponente (a) zusammen mit einer wäßrigen Emulsion der Komponente (b) zur Koagulation gebracht wird.

5. Verfahren zur Herstellung der Polymerlegierung nach Anspruch 1 oder 2, dadurch gekennzeichnet, daß Vinylidenfluorid in wäßriger Emulsion in zwei Schritten polymerisiert wird, daß im ersten Schritt ohne Kettenüberträger gearbeitet und ein Polyvinylidenfluorid hoher Schmelzviskosität entsprechend der Definition der Komponente (b) erhalten wird, und daß im zweiten Schritt in Anwesenheit eines Kettenüberträgers in einer solchen Menge gearbeitet wird, daß ein Polyvinylidenfluorid niedriger Schmelzviskosität entsprechend der Definition der Komponente (a) erhalten wird.

6. Farbe enthaltend die Polymerlegierung nach Anspruch 1 oder 2 in einer Menge von 10-90 Gew.-% des Trockenharzes.

7. Farbe nach Anspruch 6, dadurch gekennzeichnet, daß sie ein zweites, nichtfluoriertes Harz enthält.

8. Farbe nach Anspruch 7, dadurch gekennzeichnet, daß das zweite Harz aus Polymethylmethacrylat, Polyethylmethacrylat, Polyvinylacetat, Polymethylacrylat, Polyethylacrylat und deren Copolymeren ausgewählt ist.

9. Farbe nach einem der Ansprüche 6-8, dadurch gekennzeichnet, daß ferner übliche Additive darin enthalten sind, die aus Tensiden, Pigmenten, Wachsen, Stabilisatoren, Fließmitteln ausgewählt sind.

## Revendications

1. Mélange polymère comprenant :
(a) de 5 à 95% en poids d'un poly(fluorure de vinylidène) (PVDF), pouvant être obtenu par polymérisation en émulsion et ayant une viscosité à l'état fondu de 6 à 15 kPoise ;
(b) de 5 à 95% en poids d'un PVDF pouvant être obtenu par polymérisation en émulsion et ayant une viscosité à l'état fondu de 30 à 50 kPoise ;
la viscosité à l'état fondu étant mesurée à 232°C et à une vitesse de cisaillement de 100 sec⁻¹.

2. Mélange polymère selon la revendication 1, dans lequel le composant (a) est présent dans une quantité de 40 à 90% en poids, et le composant (b), dans une quantité de 10 à 60% en poids.

3. Procédé de préparation du mélange polymère tel que défini à l'une des revendications 1 et 2, qui comprend le mélange intime des deux composants sous la forme de poudre.

4. Procédé de préparation du mélange polymère tel que défini à l'une des revendications 1 et 2, qui comprend la co-coagulation d'un latex aqueux contenant le composant (a) avec un latex aqueux contenant le composant (b).

5. Procédé de préparation du mélange polymère tel que défini à l'une des revendications 1 et 2, qui comprend la polymérisation du VDF en émulsion aqueuse en deux étapes, en opérant à la première étape sans agent de transfert de chaîne afin d'obtenir un PVDF ayant une viscosité à l'état fondu élevée conformément à la définition du composant (b), en opérant à la seconde étape en présence d'un agent de transfert de chaîne, dans une quantité telle que l'on obtienne un PVDF ayant une viscosité à l'état fondu faible conformément à la définition du composant (a).

6. Peinture comprenant le mélange polymère tel que défini à l'une des revendications 1 et 2, dans une quantité de 10 à 90% en poids de la teneur en résine sèche.

7. Peinture selon la revendication 6, qui comprend une seconde résine non fluorée.

8. Peinture selon la revendication 7, dans laquelle la seconde résine est choisie parmi : le poly(méthacrylate de méthyle), le poly(méthacrylate d'éthyle), le poly(acétate de vinyle), le poly(acrylate de méthyle) et le poly(acrylate d'éthyle), et leurs copolymères.

9. Peinture selon l'une quelconque des revendications 6 à 8, qui comprend en outre des additifs classiques choisis parmi : les agents tensio-actifs, les pigments, les cires, les stabilisants, les modificateurs d'écoulement.
